# EUROPEAN PATENT APPLICATION

(11) **EP 1 905 663 A2**
(43) Date of publication of application: **02.04.2008**
(21) Application number: 07117482.5
(22) Date of filing: 28.09.2007
(51) Int. Cl.: B62B 1/12, A47B 3/00

(54) **Portable carrier/table device**

(30) Priority: 28.09.2006 AR P060104259
(71) Applicant: Chianale, Hugo Enrique, B1824AAL Buenos Aires (AR)
(72) Inventor: Chianale, Hugo Enrique, B1824AAL Buenos Aires (AR)
(74) Representative: Intes, Didier Gérard André

(57) **Abstract**

A portable carrier/table device (1), which comprises:
. a table (2) comprising a stop (3) and one hinge (4), said device (1) being able to adopt a folded configuration, a carrying cart configuration, a carrying cart support configuration or a table configuration;
. a first pair of bars (5) which are pivotally coupled to said hinge (4), on which two wheels (7) are respectively mounted;
. a second pair of bars (8) pivotally articulated on said first pair of bars (5);
. a third pair of bars (12) positioned above said first pair of bars (5) and pivotally coupled thereto; and
. a fourth pair of bars (15) positioned under said second pair of bars (8) and pivotally coupled thereto.

## Description

The present invention refers to a portable carrier/table device. More specifically, it refers to a foldable device able to be transformed both in a carrying cart (i.e. a transport carriage) and in a table, particularly in a beach table.

AR 36200 A1 discloses a beach carrier/table device provided with two wheels, able to adopt three positions by means of a dented hinges system which allows movement of two pairs of parallel supporting arms. When folded, said beach carrier/table size is reduced so it can be stored.

US 6152462 discloses a convertible hand-held carrier for equipment transport purposes. This carrier comprises three independent pivoting articulated elements. These articulated elements allow such carrier to adopt five different configurations: a folded configuration, a loading configuration, a hand-held configuration, a sloped table configuration and a standing-table one.

The inventive portable carrier/table device substantially reduces the number of joints used in the prior art, the present carrier/table being more simple when adopting the folded, carrying cart or carrying cart support or table configuration, there existing less risks of joints breakage and/or jamming, and further, its cost is lower as it has less pieces. Also, and due to the novel combination of used elements, it may transport and hold large volume objects.

Then the subject matter of present invention is a portable carrier/table device comprising:
- a table comprising an upper surface, a lower surface and a perimetric edge, the lower surface of said table comprising a stop and at least one hinge, said device being able to adopt a folded configuration, a carrying cart configuration, a carrying cart support configuration or a table configuration;
- a first pair of bars which are, at one of their ends, respectively and pivotally coupled to said at least one hinge, and at the other end thereof they are joined together by means of an axis on which two wheels are respectively mounted in a rotary manner;
- a second pair of bars housed within the space delimited by said first pair of bars, pivotally articulated on the vicinity of the middle point of said first pair of bars, which are, at one of their ends, mutually joined by means of a first cross-piece which adapts telescopically thereto and, at the other of their ends, mutually joined by means of a first transverse bar;
- a third pair of bars positioned above said first pair of bars and pivotally coupled thereto by one of their ends in a point between said middle point (9) and said axis (6), by means of a first coupling element, their other ends being mutually joined by means of a second transverse bar; and
- a fourth pair of bars positioned under said second pair of bars and pivotally coupled thereto by one of their ends in the vicinity of said middle point, by means of a second coupling element, their other ends being mutually joined by means of a third transverse bar.

The invention shall be more clearly understood when reference is made to the following drawings, in which:
Figure 1 is a perspective view of the portable carrier/table device of the invention.
Figure 2 depicts the portable carrier/table device of the invention in folded configuration.
Figure 3 depicts the portable carrier/table device of the invention in carrying cart or carrying cart support configuration.
Figure 4 depicts the portable carrier/table device of the invention in table configuration.

### Detailed description of the invention

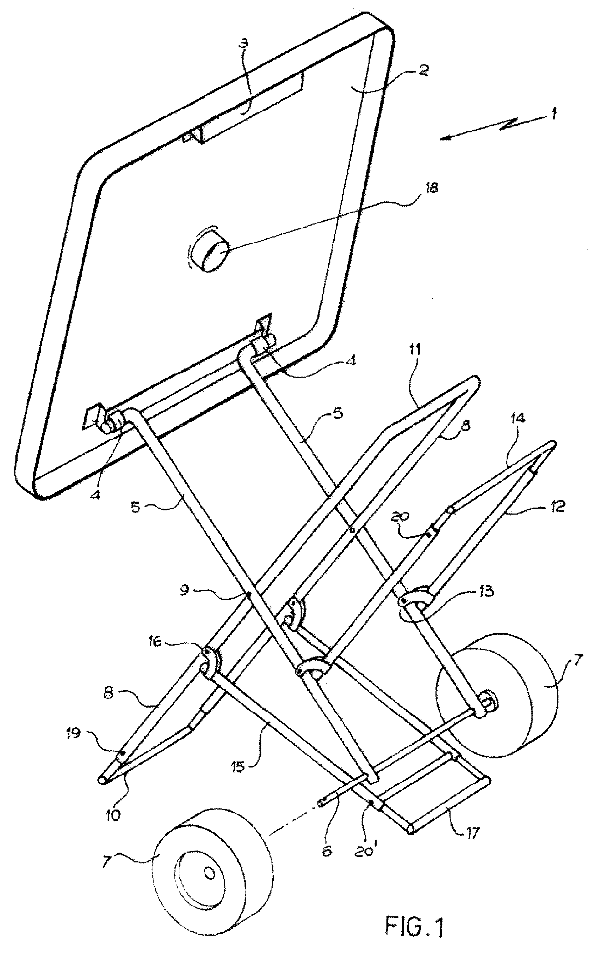

Figure 1 illustrates a portable carrier/table device 1 comprising a table 2 which has an upper surface, a lower surface and a perimetric edge thereinbetween, a front portion and a rear portion, a stop 3 attached to said lower surface in the vicinity of the front portion of said table, and at least one hinge 4 attached to said lower surface in the vicinity of the rear portion of said table 2, said device 1 being able to adopt a folded configuration, a carrying cart configuration or a carrying cart support configuration, and a table configuration, all of which will be detailed below.

Said table 2 is associated to a first pair of bars 5 which are, at one of their ends, respectively and pivotally connected to said at least one hinge 4 and wherein their other ends are mutually joined by means of an axis 6 over which a pair of wheels 7 are respectively mounted in rotary fashion.

Said first pair of bars 5 is associated to a second pair of bars 8, positioned within the space delimited by said first pair of bars 5, which are pivotally articulated at the vicinity of middle point 9 of said first pair of bars 5, which are, at one of their ends, mutually joined by means of a first cross-piece 10 which is telescopically connected thereto and which is provided with first locking means 19 for its height adjustment, and wherein the other of their ends are mutually connected by means of a first transverse bar 11.

A third pair of bars 12 are pivotally connected above said first pair of bars 5, via one of their ends and in a point between said middle point 9 and said axis 6, by means of a first coupling element 13, said third pair of bars 12 being able to pivot towards the front portion of said table 2. The other of their ends are mutually joined by means of a second transverse bar 14. Said second transverse bar may be attached to said other ends or it may function as a second cross-piece telescopically coupled to said third pair of bars 12, said second cross-piece being provided with locking means 20 for the adjustment of the height thereof.

Lastly, a fourth pair of bars 15 are pivotally coupled under said second pair of bars 8, by one of their ends and by means of a second coupling element 16 which is located in the vicinity of the middle point of said first pair of bars 5, said fourth pair of bars 15 being able to pivot towards the rear portion of said table 2. The other of the ends thereof are mutually joined by means of a third transverse bar 17. Said third transverse bar 17 may be attached to said other ends or it may function as a third cross-piece telescopically coupled to said fourth pair of bars 15, said third cross-piece being provided with third locking means 20' for the adjustment of the height thereof.

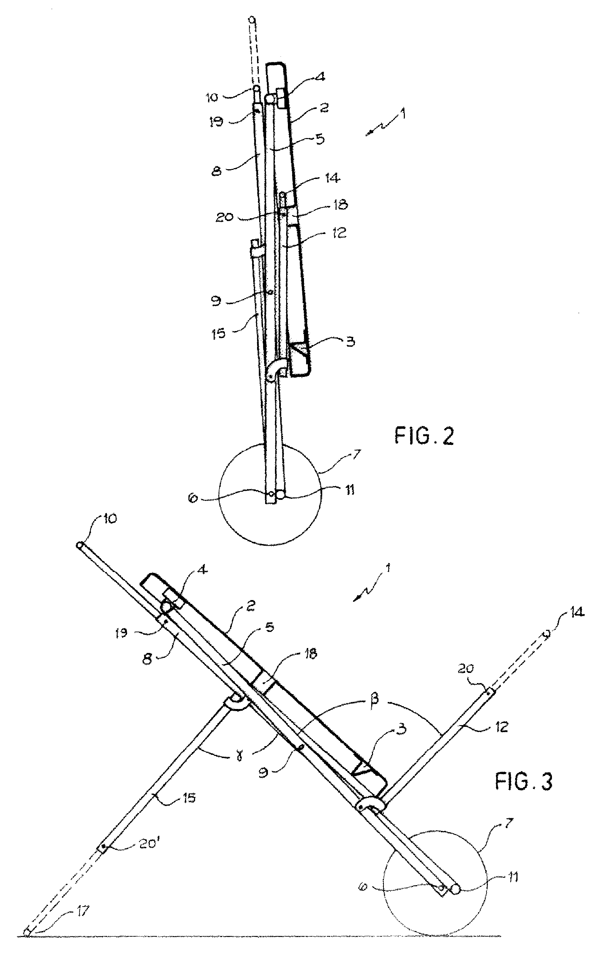

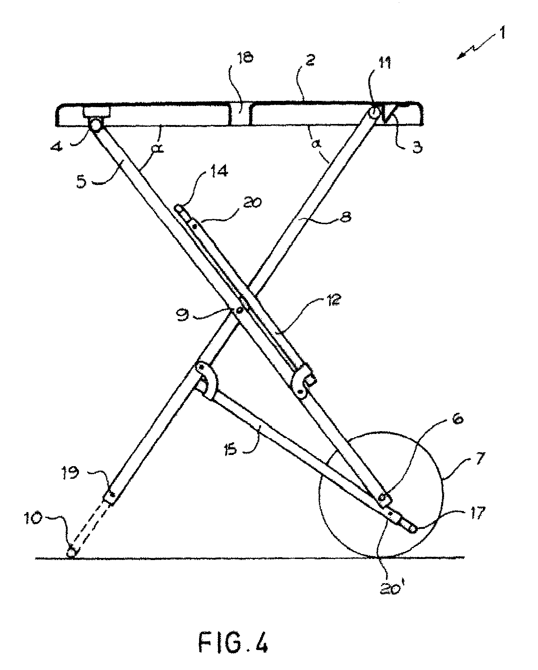

Figures 2 and 3 show that said first pair of bars 5 is parallel to said table 2 when said device 1 adopts the folded configuration, the carrying cart configuration or the carrying cart support configuration. On the other hand, and as shown by Figure 4, said first pair of bars 5 forms a substantially acute angle α with said table 2 when said device 1 adopts the table configuration.

As also shown by Figures 2 and 3, said second pair of bars 8 is parallel to said table 2 when said device 1 adopts the folded configuration, the carrying cart configuration or the support one, or it forms a substantially acute angle α with said table 2 when said device adopts the table configuration.

Figure 3 shows how cross-piece 10 telescopically displaces outwards from said one of the ends of said second pair of bars 8, when said device 1 adopts the transport carriage or the transport carrier support configuration, so that the user may hold it. Also, said first transverse bar 11 is positioned above said axis 6 when said device 1 adopts the folded configuration, the carrying cart configuration, or that of carrying cart support, as illustrated by Figures 2 and 3, or rests over said stop 3 of said table 2 when said device 1 adopts the table configuration, as shown by Figure 4.

Said third pair of bars 12 is parallel to said first pair of bars 5 when said device 1 adopts the folded or table configuration (see Figures 2 and 4), or forms an angle β with respect to said first pair of bars 5 when said device 1 adopts the carrying cart configuration, or that of carrying cart support, as illustrated by Figure 3.

Said fourth pair of bars 18 is parallel to said second pair of bars 8 when said device 1 adopts the folded configuration, as shown by Figure 2, or forms an angle γ with respect to said second pair of bars 8 when said device 1 adopts the carrying cart support configuration (see Figure 3) or the table configuration (see Figure 4). More specifically, said third transverse bar 17 is positioned under said axis 6 when said device 1 adopts the folded or table configuration, or rests on the floor when said device 1 adopts the configuration of carrying cart support (i.e. a configuration wherein the carrying cart supports itself).

Angles β and γ formed by said third and fourth pairs of bars 12, 15 with said first and second pairs of bars 5, 8 respectively, measure substantially 90°.

Also, bars of said first, second, third and fourth pairs of bars 5, 8, 12, 15 are substantially parallel among them.

Lastly, it is to be remarked that said table 2 may have an opening 18 on its centre (see Figure 4) for the insertion of a sun protecting element, such as for example a sunshade (not shown).

All of the elements which conform device 1, which is the object of the invention, should be highly resistant, specially against corrosion, and durable.

## Claims

1. A portable carrier/table device (1), **characterised in that** it comprises:
. a table (2) comprising an upper surface, a lower surface and a perimetric edge, the lower surface of said table (2) comprising a stop (3) and at least one hinge (4), said device (1) being able to adopt a folded configuration, a carrying cart configuration, a carrying cart support configuration or a table configuration;
. a first pair of bars (5) which are, at one of their ends, respectively and pivotally coupled to said at least one hinge (4) and, at the other of their ends, are joined together by means of an axis (6) on which two wheels (7) are respectively mounted in a rotary manner;
. a second pair of bars (8) housed within the space delimited by said first pair of bars (5), pivotally articulated on the vicinity of the middle point (9) of said first pair of bars (5), which are, at one of their ends, mutually joined by means of a first cross-piece (10) which telescopically couples thereto and, at the other of their ends, are mutually joined by means of a first transverse bar (11);
. a third pair of bars (12) positioned above said first pair of bars (5) and pivotally coupled thereto by one of their ends in a point between said middle point (9) and said axis (6), by means of a first coupling element (13), their other ends being mutually joined by means of a second transverse bar (14); and
. a fourth pair of bars (15) positioned under said second pair of bars (8) and pivotally coupled thereto by one of their ends in the vicinity of said middle point (9), by means of a second coupling element (16), their other ends being mutually joined by means of a third transverse bar (17).

2. The device according to claim 1, **characterised in that** said first pair of bars (5) is parallel to said table (2) when said device (1) adopts the folded configuration, the carrying cart configuration or the carrying cart support configuration, or forms an angle α with respect to said table (2) when said device (1) adopts the table configuration.

3. The device according to claim 1 or 2, **characterised in that** said second pair of bars (8) is parallel to said table (2) when said device (1) adopts the folded configuration, the carrying cart configuration or the carrying cart support configuration, or forms an angle α with respect to said table (2) when said device (1) adopts the table configuration.

4. The device according to claim 3, **characterised in that** said angle α is substantially acute.

5. The device according to any one of claims 1 to 4, **characterised in that** said cross-piece (10) is telescopically displaced outwards from said one of the ends of said second pair of bars (8) when said device (1) adopts the carrying cart configuration or the carrying cart support configuration, said first cross-piece (10) being provided with first locking means (19) for height adjustment thereof.

6. The device according to any one of claims 1 to 5, **characterised in that** said first transverse bar (11) is positioned above said axis (6) when said device (1) adopts the folded configuration, the carrying cart configuration, or the carrying cart support configuration; or rests on said stop (3) of said table (2) when said device (1) adopts the table configuration.

7. The device according to any one of claims 1 to 6, **characterised in that** said third pair of bars (12) is parallel to said first pair of bars (5) when said device (1) adopts the folded or table configuration or forms an angle β with respect to said first pair of bars (5) when said device (1) adopts the carrying cart configuration, or that of carrying cart support.

8. The device according to any one of claims 1 to 7, **characterised in that** said fourth pair of bars (15) is parallel to said second pair of bars (8) when said device (1) adopts the folded configuration, or forms an angle γ with respect to said second pair of bars (8) when said device (1) adopts the carrying cart configuration, the carrying cart support configuration or the table configuration.

9. The device according to claims 7 and 8, **characterised in that** angles β and γ formed by said third and fourth pair of bars (12,15) with said first and second pair of bars (5,8) respectively, measure substantially 90°.

10. The device according to any one of claims 1 to 9, **characterised in that** said third transverse bar (17) is positioned under said axis (6) when said device (1) adopts the folded, table or carrying cart configuration, or rests on the floor when said device (1) adopts the carrying cart support configuration.

11. The device according to any one of claims 1 to 10, **characterised in that** bars of said first, second, third and fourth pairs of bars (5,8,12,15) are substantially parallel among them.

12. The device according to any one of claims 1 to 11, **characterised in that** said second transverse bar (14) is attached to said other ends of the third pair of bars (12).

13. The device according to any one of claims 1 to 11, **characterised in that** said second transverse bar (14) adopts the form of a second cross-piece telescopically coupled to said third pair of bars (12), said second cross-piece being provided with second locking means (20) for the adjustment of the height thereof.

14. The device according to any one of claims 1 to 13, **characterised in that** said third transverse bar (17) is attached to said other ends of the fourth pair of bars (15).

15. The device according to any one of claims 1 to 13, **characterised in that** said third transverse bar (17) adopts the form of a third cross-piece telescopically coupled to said fourth pair of bars (15), said third cross-piece being provided with third locking means (20') for the adjustment of the height thereof.

16. The device according to any one of claims 1 to 15, **characterised in that** said table (2) has a central opening for the insertion of a solar protection member, for example a sunshade.

17. The device according to any one of claims 1 to 16, **characterised in that** said device is manufactured from highly resistant, specially anticorrosion, and durable elements.
